Europäisches Patentamt

**European Patent Office**

Office européen des brevets

(11) Publication number: **0 432 555 A2**

## EUROPEAN PATENT APPLICATION

(21) Application number: 90122526.8

(22) Date of filing: 26.11.90

(51) Int. Cl.⁵ **C08F 2/00**, C08F 10 00, B01J 19/18, G05B 11 32

(30) Priority: 27.11.89 US 441728

(43) Date of publication of application:
**19.06.91 Bulletin 91/25**

(84) Designated Contracting States:
**AT BE CH DE DK ES FR GB GR IT LI LU NL SE**

(71) Applicant: **PHILLIPS PETROLEUM COMPANY**
**5th and Keeler**
**Bartlesville Oklahoma 74004(US)**

(72) Inventor: **Tormaschy, Kelly Ervin**
**695 Pineloch Apt. 707**
**Webster, Texas 77598(US)**
Inventor: **Zellers, Dale Albert**
**2514 Regency Road**
**Bartlesville, OK 74006(US)**
Inventor: **Hottovy, John Douglas**
**2625 Capel Hill Road**
**Bartlesville, OK 74006(US)**

(74) Representative: **Geissler, Bernhard, Dr.jur.,**
**Dipl.-Phys. et al**
**Patent- u. Rechtsanwälte Bardehle**
**-Pagenberg-Dost-Altenburg**
**-Frohwitter-Geissler & Partner Postfach 86 06**
**20 Galileiplatz 1**
**W-8000 München 80(DE)**

(54) Control of polymerization reaction.

(57) In a polymerization reactor (11), wherein particulate polymer product material is suspended in a diluent fluid thus forming a reaction slurry, and further wherein the slurry is circulated by a pump 31,33, the flow rate of the diluent fluid introduced into the reactor is manipulated so as to prevent the polymer solids from settling out of the circulating reaction slurry and plugging the reactor 11. This is accomplished by establishing control signals 51,57,59 which typify flow rate of diluent fluid required to: (a) maintain a minimum velocity for the circulating reaction slurry, (b) maintain a maximum pressure head at a selected point in the reactor and (c) maintain a maximum power level supplied to the circulation pump. The one of signals (a). (b), and (c) above. which requires the greatest flow rate of diluent fluid, is automatically selected to manipulate diluent flow.

EP 0 432 555 A2

FIG. 1

## CONTROL OF POLYMERIZATION REACTION

This invention relates to production of a polymer. In one aspect it relates to a method of operating a polymerization reactor. In another aspect it relates to method and apparatus for inferentially controlling the composition of a slurried reaction mixture.

Background of the Invention

In a typical polymerization process, monomer, diluent, catalyst, and optionally one or more comonomers, are fed to a loop reactor where a solid polymer particle, hereinafter referred to as solids, is prepared directly in the reaction zone in the form of a slurry of solids in the diluent. The diluent does not react but is typically utilized to maintain a desired concentration of solids in the reaction mixture, and further to provide a convenient transport vehicle for introducing particulate catalyst into the reactor.

In the slurry polymerization process, the solids are essentially insoluble in the diluent, and the unreacted monomer and comonomers are essentially soluble, being maintained in solution under polymerization temperatures and pressures. The solids, however, must be maintained suspended in the diluent at all operating conditions to avoid plugging the reactor. Since the loop-type (or so called pipe-loop) reactor is provided with a circulation pump having an impeller or other circulator device to insure highly turbulent flow during the reaction and polymerization interval, the amount of solids that can reliably be maintained in suspension in the loop-type reactor is dependent on the circulation velocity, and is therefore limited by the available circulation pump power. This is because the higher solids concentration increases the apparent slurry viscosity and dramatically increases the pump power required to circulate the slurry in the loop-type reactor.

It is, therefore, important to control the solids concentration in the reaction slurry if plugging of the reactor, due to inadequate slurry circulation velocity, is to be avoided. Further, it is important to control solids concentration because operation at high solids concentration provides several additional beneficial results, such as: reduced diluent feed rate, higher catalyst activity, and improved production rate for reactors having limited diluent recycle capacity.

In controlling solids concentration in a loop-type polymerization reactor, a calculated value has typically been utilized to represent the actual value for weight solids concentration in the reaction mixture. This is because available measuring methods requires 4 to 10 minutes to make a direct determination of solids concentration. In the past, this calculated value for weight solids concentration has been based on a calculation which required several parameters. For example, the solids concentration calculation was based on the measured density of the reaction slurry, a constant predetermined value for density of the polymer, and a further calculated value for the density of the liquid phase in the reaction slurry.

While solids concentration control, based on the above mentioned densities, results in increased overall efficiency of the reaction, and production of a product of uniform and desirable quality or specification, it is difficult to operate the loop reactor at the highest practical solids concentration level while using a calculated value for solids concentration. This is because several process equipment constraints, such as insufficient circulation pump horsepower or pump pressure head, or an inadequate slurry circulation velocity, may be encountered.

It is therefore an object of this invention to provide an improved method of control in a polymerization loop reactor, by manipulating one or more reactor feed streams responsive to the process variables which constrain the quantity of solids present in the reaction slurry.

It is a further object of this invention to provide an improved mode of control over the solids concentration in the slurried reaction mixture which takes into consideration the slurry circulation velocity.

It is another object of this invention to provide a method and apparatus for operating a polymerization process at the highest practical volume solids concentration without plugging the reactor.

It is another object of this invention to provide a method and apparatus for controlling solids concentration based on known relationships between the solids concentration and a plurality of related variables.

SUMMARY OF THE INVENTION

In accordance with the present invention, method and apparatus are disclosed whereby the volume solids concentration of a polymerization reaction slurry is optimized by maintaining the solids concentration in a polymerization reaction at the highest practical level. The solids concentration optimization is based on constraints imposed by three related process variables which include: slurry circulation velocity, circulation pump power, and pressure head provided by the circulation pump.

In a preferred embodiment of the present invention, each of the above-identified process variables, which limit the solids concentration, is provided with its own process controller, and the controller having the highest output signal level (i.e. greatest positive deviation from set point) is automatically selected to manipulate diluent feed to the reactor. In one aspect the volume solids concentration in the reactor slurry, which is difficult to continuously measure, is continuously controlled by virtue of controlling a related variable which is susceptible to continuous measurement. In another aspect the select control system of this invention protects against polymer plugging of a polymerization loop reactor by increasing the diluent flow rate.

Further in accordance with the preferred embodiment of the present invention, the polymerization is accomplished in a pipe-loop type reactor provided with a motor-driven pump or circulator; typically employing an impeller, to insure a highly turbulent flow having at least a predetermined minimum velocity during the reaction interval. In the loop-type reactor, the reaction zone is in the form of a continuous loop wherein circulation is maintained by the force of the pump. In the slurry process of the loop-type reactor, operation in the liquid phase is preferable since removal of exothermic heat of reaction is much more easily accomplished.

Other objects and advantages of the present invention will be apparent from the foregoing brief description of the invention and the claims as well as the detailed description of the invention and the drawings which are briefly described as follows:

## BRIEF DESCRIPTION OF THE DRAWINGS

FIG. 1 is a simplified schematic illustration of a polymerization reaction system and the associated control system of the present invention.

FIG. 2 is a graph illustrating slurry velocity, pump pressure head and pump power as a function of volume percent solids for the reaction system as illustrated in FIG. 1.

FIG. 3 is a graph illustrating a minimum velocity which will prevent plugging; the slurry velocity achieved with a low capacity pump; and the slurry velocity achieved with a high capacity pump; with all variables displayed as a function of volume percent solids in the reaction mixture.

## DETAILED DESCRIPTION OF THE PREFERRED EMBODIMENT

This invention is described in terms of the polymerization of ethylene. The invention is applicable, however, to any process where it is desired to maintain a circulation velocity for a slurry in a pipe above a minimum value. It is particularly applicable to the optimization of solids concentration in a loop-type polymerization reactor, wherein the solids concentration is inferentially controlled.

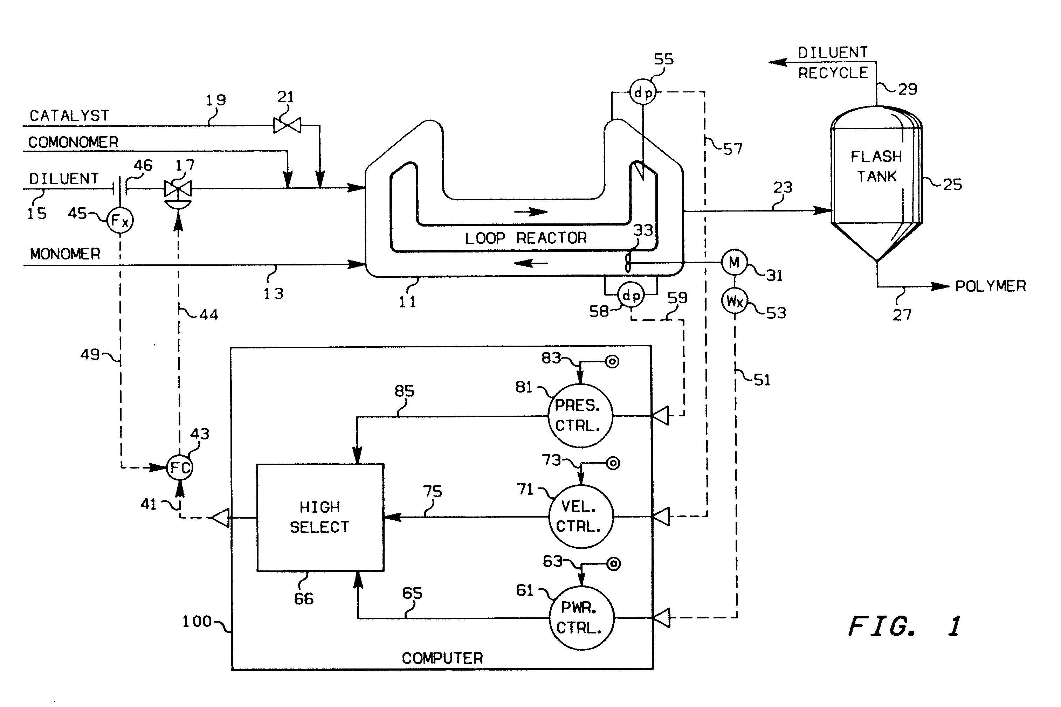

A specific control system configuration is set forth in FIG. 1 for the sake of illustration. However, the specific control configuration is not a critical feature of the present invention, and the invention is applicable to a large variety of control configurations which may be utilized to accomplish the purpose of this invention.

Lines designated as signal lines in the drawings are electrical or pneumatic in this preferred embodiment. Generally, the signals provided from any transducer are electrical in form. However, the signals provided from some sensors may be pneumatic in form. Transducing of these signals is not illustrated for the sake of simplicity because it is well known in the art that a measurement in pneumatic form must be transduced to electrical form if it is to be transmitted in electrical form. Also, transducing of signals from analog to digital form or from digital form to analog form is not illustrated because such transducing is also well known in the art.

The invention is also applicable to mechanical, hydraulic or other means for transmitting information. In almost all control systems some combination of electrical, pneumatic, or hydraulic signals will be used. However, use of any other type of signal transmission, compatible with the process and equipment in use, is within the scope of the invention.

A digital computer is used in the preferred embodiment of this invention to calculate, or select, the required control signal based on measured process parameters as well as set points supplied to the computer or controller. The digital computer is preferable an OPTROL® 7000 Process Computer System from Applied Automation, Inc., Bartlesville, Oklahoma.

Signal lines are also utilized to represent the results of computer calculations or other operations accomplished in a digital computer, and the term "signal" is utilized to refer to such results. Thus, the term signal is used not only to refer to electrical currents or pneumatic pressures but is also used to refer to binary representations of a calculation or measured value.

The controllers shown can utilize the various modes of control such as proportional, proportional-integral, proportional-derivative, or proportional-integral-derivative. In this preferred embodiment proportional-integral controllers are utilized but any controller having capacity to accept two or more input signals and to produce a scaled output signal, representative of a comparison of the input signals is within the scope of this invention.

The scaling of an output signal by a controller is well known in control systems art. Essentially the output of a controller can be scaled to represent any desired factor or variable. An example of this is where a desired temperature and an actual temperature are compared by a controller. The controller output might be a signal representative of a flow rate of some gas necessary to make the desired and actual temperatures equal. On the other hand the same output signal could be scaled to represent a pressure required to make the desired and actual temperatures equal. If the controller output can range from 0 to 10 volts, then the controller output signal could be scaled so that an output signal having a voltage level of 5.0 volts corresponds to 50 percent, some specified flow rate, or some specified pressure.

In control systems utilizing select devices which select either the lowest, median, or highest control signal from among two or more signals, and wherein a controller output signal may or may not be selected from two or more signals, an unselected controller is in an open loop condition. If the unselected controller has integral action, which is most often the case, it needs to be protected against windup.

The various transducing means used to measure parameters which characterize the process and the various signals generated thereby may take a variety of forms or formats. For example, the control elements of the system can be implemented using electrical analog, digital electronic, pneumatic, hydraulic, mechanical or other similar types of equipment or combinations of such equipment types.

Referring now to FIG. 1, there is illustrated a polymerization reactor 11. This reactor 11 is a loop-type reactor which provides a continuous path for the circulation of the reaction mixture. Such a reactor can be made oblong in shape from straight pipe sections and ell's which are joined together to form a continuous flow path which is free of obstructions. Reactor 11 would typically be jacketed by heat exchange sections (not illustrated) for removing heat from the polymerization reaction. The reactor is also provided with suitable circulator or propelling means, such as a motor 31 which drives a propeller 33. In this type of reactor, the reaction mixture is propelled through the reaction zone at a velocity in the highly turbulent flow range.

Ethylene is supplied to reactor 11 through conduit 13. In like manner, a diluent, such as isobutane, pentane, isopentane or mixtures thereof, is provided to the reactor 11 through conduit 15 and flow control valve 17. A catalyst, such as a typical chromium oxide on silica catalyst or a silica-titania catalyst, is provided to polymerization reactor 11 through conduit 19. The catalyst for the reaction flowing through conduit 19, which is passed to the reactor 11 along with the isobutane diluent and possibly a comonomer, is introduced periodically into the reactor 11. This periodic or intermittent introduction of the catalyst is accomplished by the use of the catalyst feeder valve 21, which is located in conduit 19 so as to regulate the flow of catalyst.

The reaction effluent is withdrawn from reactor 11 through conduit 23 and is passed to the flash tank 25. The reaction effluent will be made up of polyethylene, unreacted ethylene and isobutane. The catalyst will generally be contained in the polyethylene.

The polyethylene is separated from the vaporized components, which comprise unreacted ethylene and isobutane, in the flash tank 25. Polyethylene is removed from the flash tank 25 through conduit 27. Unreacted ethylene and isobutane are withdrawn from the flash tank 25 through conduit 29 and passed to suitable separation equipment (not illustrated), to separate the unreacted monomer from the diluent which is then recycled back to the reaction system.

As previously stated, the diluent supplied to the reactor 11 through conduit 15 does not react, but is used to control solids concentration in the reaction mixture. The set point signal 41 for the diluent flow rate controller 43, which is selected according to the present invention, is utilized to maintain the actual solids concentration at substantially the highest practical concentration without plugging the reactor, as will be more fully explained hereinafter.

The polymerization reaction system described to this point is conventional. It is the manner in which the polymerization reaction system is operated and the manner in which the solids concentration is controlled so as to achieve the highest practical solids concentration without plugging the reactor that provide the novel features of this invention. Further information and details of the polymerization process, including examples of suitable reaction conditions, and also examples of other monomers, comonomers, diluents, etc., as well as suitable control schemes for other important variables, such as production rate, can be found in U.S. Patent No. 3,998,995 of Buss, et al, and U.S. Patent No. 3,257,363 of Miller, et al, the disclosures of which are incorporated herein by reference.

Still referring to FIG. 1, the elements utilized to control the solids concentration will be described. A circulating pump power signal 51 which is representative of the actual power supplied to motor 31, is generated by a power transducer 53 which monitors the motor 31. Typically the motor 31 will be an electric motor, and the power transducer 53 can comprise a wattmeter for providing a suitable power signal. Signal 51 is provided from transducer 53 as an input signal to computer 100.

A differential pressure transducer 55, which is installed in elbow taps at an existing elbow of the loop-type reactor 11, provides an output signal 57, which is representative of the actual velocity of the slurry circulating in the fixed pipe diameter of loop reactor 11. Signal 57 is provided from pressure transducer 55 as an input signal to computer 100.

A differential pressure transducer 58, which is installed in a section of the reactor pipe associated with the impeller 33, provides an output signal 59 which is representative of the pressure head arising from the pressure in the pipe produced by the circulation pump means comprising the motor 31 and impeller 33. Signal 59 is provided from pressure transducer 58 as an input signal to computer 100.

A flow transducer 45, in combination with a flow sensing element such as an orifice 46 operably located in conduit 15, produces flow signal 49 which is representative of the flow rate of diluent flowing in conduit 15. Signal 49 is provided from transducer 45 as a process variable input signal to diluent flow controller 43. Flow controller 43 is also provided with the computer generated set point signal 41. Flow controller 43 provides an output signal 44 which is responsive to the difference between signals 41 and 49. Control signal 44 is scaled so as to be representative of the position of control valve 17 which is operably located in conduit 15, required to maintain the actual flow rate of the diluent through conduit 15 substantially equal to the desired flow rate represented by signal 41. Signal 44 is provided from the flow controller 43 as the control signal to control valve 17, and control valve 17 is manipulated in response thereto.

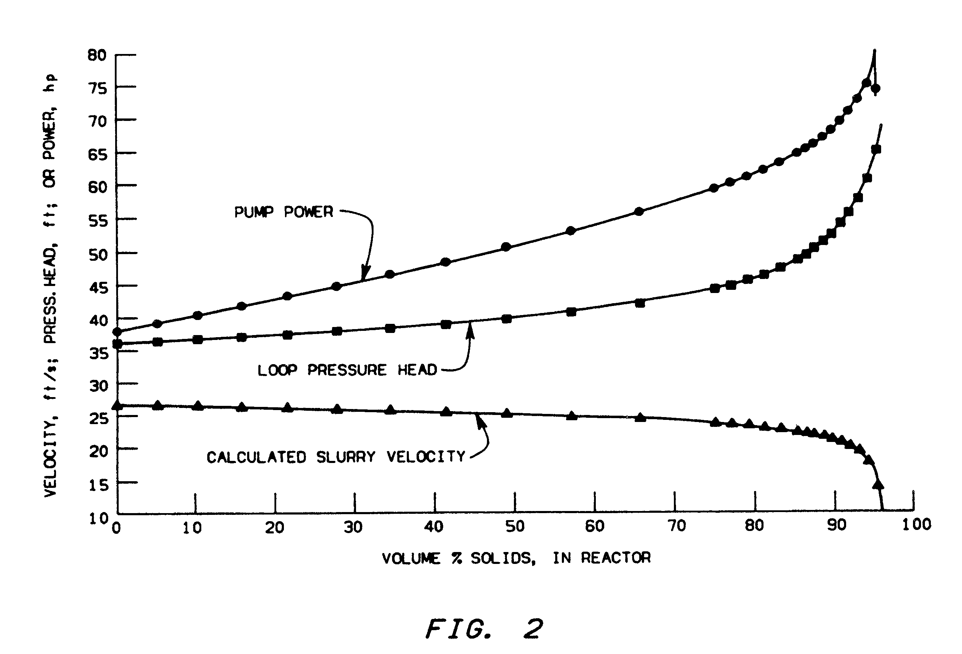

In accordance with the present invention, three process variables are graphically illustrated in FIG. 2, each of which closely correlates with the volume percent solids in the reaction slurry. These variables are:

(1) slurry velocity, which is the minimum velocity required for maintaining the polymer solids in suspension, i.e., "plug-free operation." This variable is calculated based on Durand's equation taken from a text by Wasp, E.J., et al, "Solid-Liquid Flow Slurry Pipeline Transportation", 1st edition, Trans Tech Publications, 1977. The equation, with appropriately determined constants is:

$$Vl = 2.86 \, {}^{*}Cv^{**}.l \, {}^{*} (2 \, {}^{*} g \, {}^{*} D(ps-pl)/pl)^{**}.5$$

where:

Vl = minimum velocity (avg. far pipe section), ft/sec.
Cv = volume fraction of solids,
g = acceleration of gravity, ft/sec$^2$
D = internal diameter of pipe, ft.
ps = solids density, lb/ft$^3$, and
pl = liquid density, lb/ft$^3$

(2) pump head, which is the pressure head at a point in the pipe required to circulate the slurry, having a given solids concentration, at the minimum circulation velocity.

(3) pump power, which is the pump power corresponding to the above described velocity and pressure head.

While any one of these variables could be controlled by manipulating the diluent flow rate, and thereby correspondingly control solids concentration, it is presently preferred to provide a controller for each of these variables and automatically select one of these three controllers to manipulate the diluent flow rate. In this manner the pipe-loop reactor is protected against polymer plugging by increasing the diluent flow rate if any one of the variables exceeds a desired value. For example, the diluent flow rate is normally manipulated to control slurry velocity, but if a pressure head which indicates inadequate capacity to circulate the slurry is detected, the pressure head signal takes command of the diluent control valve 21 and increases diluent flow. Accordingly, the variable having the greatest positive deviation from its' set point (i.e. demands the greatest diluent flow rate to return to its' set point) is automatically selected to manipulate the diluent flow rate.

The logic diagram utilized to select the set signal 41 for diluent flow controller 45, in response to the previously described input signals 51, 57, and 59, is further illustrated in FIG. 1. Signal 51, which is representative of the actual power supplied to the slurry circulation motor 31, is provided as a process variable input to power controller 61 in computer 100. Power controller 61 is also provided with a set point signal 63 which is representative of the maximum circulation pump power permitted for maintaining a desired velocity, or head, for a given solids concentration. In response to signals 51 and 63 power controller 61 provides an output signal 65 which is responsive to the difference between signals 51 and 63. Control signal 65 is scaled so as to be representative of the diluent flow rate in conduit 15 required to maintain the actual pump power represented by signal 51 substantially equal to the pump power represented by signal 63. Signal 65 is provided from power controller 65 as a first input signal to the computer high select block 66.

In a similar manner signal 57, which is representative of the actual slurry circulation velocity, and signal 59 which is representative of the actual pressure head in the loop reactor 11, are provided as process variable inputs to process controllers 71 and 81 respectively.

Process controller 71 is also provided with a set point signal 73, which is representative of a minimum slurry velocity that will maintain the polymer solids in suspension in a slurry having a given solids concentration. In response to signals 57 and 73 slurry velocity controller 71 provides an output signal 75 which is responsive to the difference between signals 57 and 73. Control signal 75 is scaled so as to be representative of the diluent flow rate in conduit 15 required to maintain the actual slurry velocity represented by signal 57 substantially equal to slurry velocity represented by signal 73. Signal 75 is provided from slurry velocity controller 71 as a second input to the computer high select block 66.

In a similar manner pressure head controller 81 is also provided with a set point signal 83 which is representative of the maximum pressure head at a point in the pipe required to circulate the slurry, having a given solids concentration, at the minimum circulation velocity. In response to signals 59 and 83 pressure head controller 81 provides an output signal 85 which is responsive to the difference between signals 59 and 83. Control signal 85 is scaled so as to be representative of the diluent flow rate in conduit 15 required to maintain the actual pressure head represented by signal 59 substantially equal to the pressure head represented by signal 83.

In general, the set point signals 63, 73, and 83 will be selected with the aid of a figure similar to FIG. 2, or from previous operating experience. In either event, each of the values for the set point signals 63, 73, and 83 will correspond to a desired solids concentration for the reaction slurry.

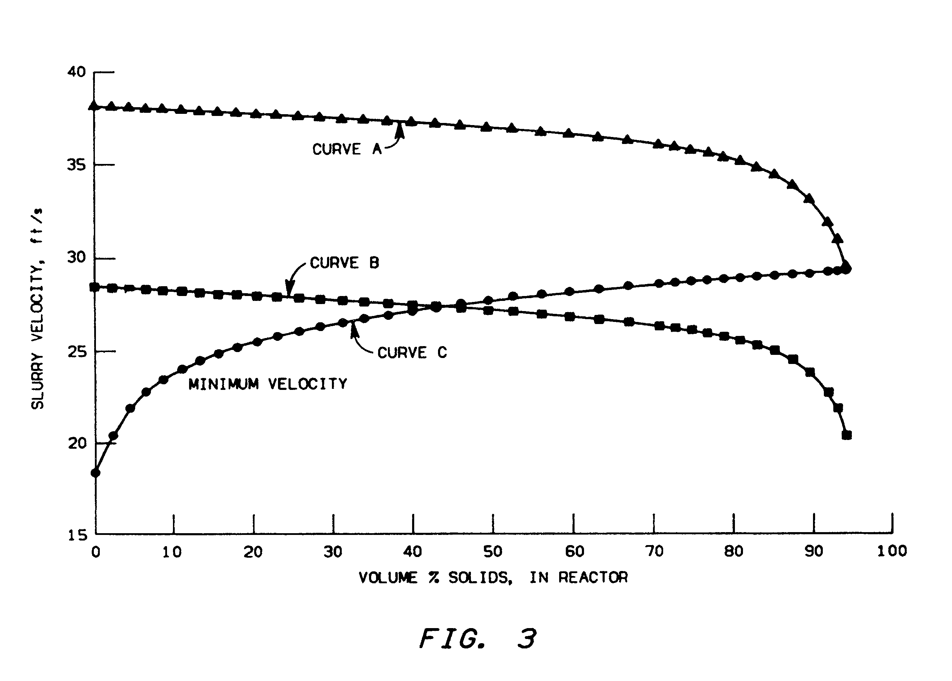

The highest one of signals 65, 75, and 85 is provided as signal 41 from the computer high select block 66. Referring now to FIG. 3, Curve C illustrates the minimum slurry velocity required to operate a polyethylene pipe-loop reactor without plugging the reactor. This graph also shows a plot of two other critical slurry circulation velocities as a function of volume percent solids concentration in the reaction slurry, i.e., curve A, in FIG. 3, shows the circulation velocity achieved with a high capacity circulation pump; curve B shows the velocity achieved with a low capacity pump. In FIG. 3 the intersections of curves A and B with curve C indicate the maximum slurry solids concentration that can be maintained by the respective pumps.

Curves A and B of FIG. 3 represent numerous calculated data points to clearly illustrate the sharp drop-off in circulation velocity as the solids concentration exceeds about 80 volume percent solids. Curve C, which illustrates the increase in circulation velocity required as the solids concentration increases, was calculated in accordance with the aforementioned Durand Equation.

## EXAMPLE

A specific example will now be described for a process like that illustrated in FIG. 1, wherein high solids concentration levels were run in a development plant size pipe-loop reactor.

In this polymerization process (for high solids concentration levels for a resin designated type A), under steady state operating conditions, an olefin feed stream consisting of 1,675 lbs./hr. of ethylene, 16 lbs./hr. of hexene-1, and 916 lbs/hr. of isobutane, and having a pressure of 600 psig is fed to a pipe loop reactor along with 0.51 lbs./hr. of a chromium oxide-silica aluminia catalyst, the catalyst having a productivity of 3,190 lbs. polymer/lb. catalyst. The reactor itself has a capacity of 600 gallons. Polymer was withdrawn at a rate of 1,635 lbs./hr.; along with 916 lbs./hr. of isobutane; 39 lbs./hr. of ethylene; and 1.6 lbs./hr. of hexene-1.

The reaction temperature was maintained below 230° F and was preferably in the range of 150° - 225° F with a reactor residence time of about 1.2 hours.

The volume percent solids in the reactor was measured by visually observing the solids level of a representative captive sample of the reaction mixture which was allowed to settle at saturation pressure in a sight glass. In this measurement method, the volume percent solids is determined by observing the height of the settled polymer particles in the sight glass and dividing this observed height by the height of the total captive sample of the reaction mixture, and wherein the cross sectional area of the sight glass containing the captive sample is the same as the cross sectional area of the vertical pipe of the pipe-loop reactor.

The weight percent solids of the effluent for the developmental plant reactor was calculated based on a material balance using the measured reactor feed rates, and an analysis the effluent flash gas.

Test results comparing high and low solids concentration levels are given in Table 1 for production of three different resin types:

## TABLE I

### COMPARISON OF SOLIDS CONCENTRATION LEVELS

| Resin Type A | Low Solids | High Solids |
|---|---|---|
| Volume % solids in reactor | 65 | 87 |
| Weight % solids in effluent | 52 | 63 |
| Production rate (lbs./hr.) | 1010 | 1635 |

| Resin Type B | | |
|---|---|---|
| Volume % solids in reactor | 53 | 70 |
| Weight % solids in effluent | 54 | 62 |
| Production rate (lbs./hr.) | 957 | 1567 |

| Resin Type C | | |
|---|---|---|
| Volume % solids in reactor | 55 | 90 |
| Weight % solids in effluent | 37 | 46 |
| Production rate (lbs./hr.) | 612 | 1075 |

Resin types A, B and C are examples of typical resins commercially produced in a pipe-loop reactor, wherein resin A has a density of .955 g/cc, resin B has a density of .962 g/cc, and resin C has a density of .937 g/cc.

The above example clearly illustrates successful operation of a pipe-loop reactor under conditions of high solids concentration levels, with demonstrated volume percent solids concentration in the reactor as high as 90 volume percent. The higher solids concentration levels in the reactor provide several benefits as follows:

(1) increasing the solids concentration level in the reactor effluent which improves the reactor efficiency,

(2) increasing the solids residence time for a constant polymer production rate which improves catalyst activity, and

(3) increasing the polymer production rate for a given capacity of isobutane diluent recycle.

The invention has been described in terms of a preferred embodiment as illustrated in FIG's. 1-3. Specific components used in the practice of this invention as illustrated in FIG. 1 which have not been previously specified, such as control valve 17, flow controller 43, flow transducer 44, flow sensor 46, differential pressure transducers 57 and 55, and power transducer 53, are each well known, commercially available components such as are described at length in "Perry's Chemical Engineers' Handbook", Fifth Edition, Chapter 22, McGraw-Hill. The catalyst feeder valve 21 may be a Seiscore ball check feeder valve.

For reasons of brevity and clarity, conventional auxiliary equipment such as pumps, heat exchangers and other process equipment have not been included in the above description as they play no part in the explanation of the invention. Also additional measurement and control elements which would be utilized to control other important parameters such as the flow rate of ethylene and the flow rate of catalyst to the reactor have not been illustrated as these play no part in the explanation of the present invention.

While the invention has been described in terms of the presently preferred embodiment, reasonable variations and modifications are possible by those skilled in the art and such variations and modifications are within the scope of the described invention and the appended claims.

EP 0 432 555 A2

**Claims**

1. Apparatus comprising:
   a) a polymerization reactor;
   b) monomer feed means for supplying monomer to be polymerized to said polymerization reactor;
   c) a control valve;
   d) diluent feed means for introducing a diluent fluid into said polymerization reactor through said control valve, wherein a reaction slurry essentially containing a solid polymer product and said diluent fluid is formed in said polymerization reactor;
   e) pump means for circulating said reaction slurry in said polymerization reactor;
   f) product removal means for withdrawing reaction effluent containing said solid polymer from said reactor;
   g) means for establishing a first signal representative of the actual circulation velocity of said slurry in said polymerization reactor;
   h) means for establishing a second signal representative of the actual power supplied to said pump means;
   i) means for establishing a third signal representative of the actual pressure head at a point in said polymerization reactor; and
   j) manipulating means for adjusting the flow rate of said diluent fluid responsive to a selected one of said first signal, second signal and third signal.

2. Apparatus in accordance with claim 1 comprising one or more of the following apparatus modifications:
   i) said manipulating means comprises:
   signal select means;
   means for establishing a fourth signal representative of a desired minimum value for circulation velocity of said slurry in said polymerization reactor;
   means for comparing said first signal and said fourth signal and for establishing a fifth signal responsive to the difference between said first signal and said fourth signal, wherein said fifth signal is scaled so as to be representative of the flow rate of said diluent fluid into said polymerization reactor required to maintain the actual slurry velocity represented by said first signal substantially equal to said desired minimum value for circulation velocity of said slurry in said polymerization reactor represented by said fourth signal;
   means for establishing a sixth signal representative of the desired maximum power for said pump means;
   means for comparing said second signal and said sixth signal and for establishing a seventh signal responsive to the difference between said second signal and said sixth signal, wherein said seventh signal is scaled so as to be representative of the flow rate of said diluent fluid into said polymerization reactor required to maintain the actual pump power represented by said second signal substantially equal to said desired maximum power supplied to said pump means represented by said sixth signal;
   means for establishing an eighth signal representative of a desired maximum pressure head at said point in said polymerization reactor;
   means for comparing said third signal and said eighth signal and for establishing a ninth signal responsive to the difference between said third signal and said eighth signal, wherein said ninth signal is scaled so as to be representative of the flow rate of said diluent fluid into said polymerization reactor required to maintain the actual pressure head in said polymerization reactor represented by said third signal substantially equal to said desired maximum pressure head represented by said eighth signal;
   means for providing said fifth signal, said seventh signal and said ninth signal to said select means, wherein the higher one of said fifth signal, said seventh signal and said ninth signal is selected as a tenth signal; and
   means for manipulating the flow rate of said diluent fluid into said polymerization reactor in response to said tenth signal,
   ii) said product removal means comprises:
   a flash tank;
   means for providing said reaction effluent containing polymer as a feed to said flash tank;
   means for withdrawing an overhead stream from said flash tank; and
   means for withdrawing a bottoms stream containing polymer product from said flash tank.

9

iii) said polymerization reactor comprises a pipe-loop reactor and wherein said pump means includes an impeller within said pipe-loop reactor.

3. Apparatus in accordance with claim 2 wherein said means for manipulating the flow rate of said diluent fluid into said polymerization reactor in response to said tenth signal comprises:

means for establishing an eleventh signal representative of the actual flow rate of said diluent fluid to said reactor;

means for comparing said tenth signal and said eleventh signal and for establishing a twelfth signal responsive to the difference between said tenth signal and said eleventh signal, wherein said twelfth signal is scaled so as to be representative of the position of said control valve required to maintain the actual flow rate of said diluent fluid to said polymerization reactor represented by said eleventh signal substantially equal to the flow rate represented by said tenth signal; and means for providing said twelfth signal as a control signal to said control valve, wherein said control valve is manipulated in response to said twelfth signal.

4. A loop-type polymerization method wherein a solid polymer product is formed in a reaction slurry essentially containing said polymer and a diluent fluid, and wherein said reaction slurry is circulated around said loop-type reactor by a circulation pump, a method for manipulating the flow rate of said diluent fluid, which is supplied to said loop-type reactor, comprises the following steps:

a) introducing said diluent fluid into said loop-type reactor through a control valve;

b) establishing a first signal representative of the actual circulation velocity of said slurry in said loop-type reactor;

c) establishing a second signal representative of the actual power supplied to said circulation pump;

d) establishing a third signal representative of the pressure head at a point in said loop-type reactor;

e) establishing a fourth signal which is responsive to one of said first signal, said second signal and said third signal; and

f) manipulating the flow rate of said diluent fluid to said loop-type reactor in response to said fourth signal.

5. A method in accordance with claim 4 comprising one or more of the following process modifications:

i) said step of establishing a fourth signal responsive to one of said first signal, said second signal, and said third signal comprises the following steps:

establishing a fifth signal which is representative of the desired minimum circulation velocity in said loop-type reactor; comparing said first signal and said fifth signal and establishing a sixth signal responsive to the difference between said first signal and said fifth signal, wherein said sixth signal is scaled so as to be representative of the flow of said diluent fluid into said loop-type reactor required to maintain the actual slurry velocity, represented by said first signal, substantially equal to said desired minimum value for circulation velocity of said slurry in said loop-type reactor represented by said fifth signal;

establishing a seventh signal which is representative of the desired maximum power supplied to said circulation pump;

comparing said second signal and said seventh signal and establishing an eighth signal responsive to the difference between said second signal and said seventh signal, wherein said seventh signal is scaled so as to be representative of the flow rate of said diluent fluid into said loop-type reactor required to maintain the actual power supplied to said circulation pump, represented by said second signal, substantially equal to said desired maximum power supplied to said circulation pump represented by said seventh signal;

establishing a ninth signal which is representative of the desired maximum pressure head at a point in said loop-type reactor;

comparing said third signal and said ninth signal and establishing a tenth signal responsive to the difference between said third signal and said ninth signal, wherein said tenth signal is scaled so as to be representative of the flow rate of said diluent fluid into said loop-type reactor required to maintain the actual pressure head, represented by said third signal, substantially equal to the desired maximum pressure head represented by said ninth signal; and

selecting the one of said sixth signal, said eighth signal and said tenth signal, which requires the greatest diluent flow rate into said loop-type reactor, for said fourth signal,

ii) said step for manipulating the flow rate of said diluent fluid into said loop-type reactor in response to said fourth signal comprises: establishing an eleventh signal representative of the actual flow rate of said diluent fluid into said loop-type reactor;

comparing said fourth signal and said eleventh signal and establishing a twelfth signal responsive to the difference between said fourth signal and said eleventh signal, wherein said twelfth signal is scaled so as to be representative of the position of said control valve required to maintain the actual flow rate of said diluent fluid, represented by said eleventh signal, substantially equal to the flow rate represented by said fourth signal; and

providing said twelfth signal as a control signal to said control valve and manipulating said control valve in response thereto.

iii) The method additionally comprises the following steps:

withdrawing reaction effluent containing polymer from said loop-type reactor;

providing said reaction effluent containing polymer as a feed to a flash tank;

withdrawing an overhead stream from said flash tank; and

withdrawing a bottoms stream containing polymer product from said flash tank, more particularly wherein said desired minimum circulation velocity represented by said fifth signal corresponds to a predetermined value for solids concentration in said loop-type reactor, yet more particularly wherein said desired maximum power supplied to said circulation pump represented by said seventh signal corresponds to a predetermined value for solids concentration in said loop-type reactor, and preferably wherein said desired maximum pressure head at a point in said loop-type reactor represented by said ninth signal corresponds to a predetermined value for solids concentration in said loop-type reactor, and preferably wherein said desired maximum pressure head at a point in said loop-type reactor represented by said ninth signal corresponds to a predetermined value for solids concentration in said loop-type reactor, and preferably wherein said desired maximum pressure head at a point in said loop-type reactor represented by said ninth signal corresponds to a predetermined value for solids concentration in said loop-type reactor.

6. A process for producing a polymer resin, which comprises the step of reacting a monomer under polymerisation conditions in a reactor to form solid polymer particles in the presence of a polymerization catalyst and a diluent fluid, wherein said monomer is soluble and said polymer particles are insoluble in said diluent fluid, and wherein a reaction slurry essentially containing said solid polymer particles and said diluent fluid is formed in said reactor, said polymerization conditions comprising:

a temperature in the range of from about $150\degree$F to about $225\degree$F; and a concentration of said solid polymer particles in said reaction slurry of from about 72 volume percent to about 91 volume percent.

7. A process in accordance with claim 6 comprising one or more of the following process modifications:

i) said monomer comprises ethylene and said diluent is selected from a group comprising isobutane, pentane, isopentane, and mixtures thereof,

ii) said catalyst comprises a chromium oxide-silica catalyst,

iii) the concentration of said solid polymer particles in said reaction slurry is determined by:

capturing a representative sample of said reaction slurry on a sight-glass;

allowing said solid polymer particles to settle at saturation pressure in said sight-glass;

observing the height of the settled solid polymer particles in said sight-glass; and

dividing the observed height of said solid polymer particles by the height of the total captive sample of said reaction slurry.

8. A process in accordance with claim 7 wherein the cross-sectional area of said sight-glass is essentially the same as the cross-sectional area of a vertical pipe of said pipe-loop reactor.

9. A process in accordance with one of claims 6 - 8 and in accordance with one of claims 4 - 5.

10. A process in accordance with one of claims 4 or a claim referring to claim 4 wherein monomer comprising ethylene is polymerized and said diluent comprises isobutane.

FIG. 1

FIG. 2

FIG. 3